Europäisches Patentamt

European Patent Office

Office européen des brevets

(11) Publication number: **0 241 037**
**B1**

(12) **EUROPEAN PATENT SPECIFICATION**

(45) Date of publication of patent specification: **04.07.90**

(51) Int. Cl.⁵: **C 03 B 37/018**

(21) Application number: **87105285.8**

(22) Date of filing: **09.04.87**

(54) **Process of and apparatus for manufacturing optical-fibre preforms for operation in the mid infrared spectral range.**

(30) Priority: **10.04.86 IT 6729086**

(43) Date of publication of application:
**14.10.87 Bulletin 87/42**

(45) Publication of the grant of the patent:
**04.07.90 Bulletin 90/27**

(84) Designated Contracting States:
**DE FR GB NL SE**

(56) References cited:
**EP-A-0 025 230**
**EP-A-0 135 903**
**DE-B-2 546 162**
**FR-A-2 369 224**
**US-A-4 610 708**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Cocito, Giuseppe**
**V. M. D'Azeglio, 15**
**San Giusto Can.se (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Courier Press, Leamington Spa, England.

## Description

The present invention concerns a process of manufacturing optical-fibre preforms for operation in the mid-infrared spectral range, using solid-state metal halides as raw materials, and further concerns an apparatus for implementing the process, such apparatus comprising two or more vessels heatable to a high temperature, a conduit connected to said vessels and heatable to a temperature equal to or higher than the highest temperature among those of the vessels, and means for holding a glass tube into which said conduit can penetrate in axial position, means being also provided to rotate the tube around its axis, such kind of apparatus being generally known e.g. from DE—B—2 546 162.

For manufacturing preforms for optical fibres with a stepped refraction index profile, it is known to use the above apparatus for carrying out a process similar to CVD chemical vapour deposition and exploiting oxidation, first of the reactants having high vapour temperature and being led to the reaction chamber via heated conduits while the second reactant is oxygen.

As known, halides, chalcogenides and heavy-metal oxides are taken as the most promising materials for manufacturing extremely low-loss glasses for the transmission of light radiations at wavelengths ranging from 2 to 12 μm. More particularly, attenuation values of the order of $10^{-4}$ dB/km are considered as attainable. In this way optical transmission systems with trunk lengths of several thousand kms without intermediate repeaters may be implemented.

A method of fabricating halide-based optical fibre preforms, and more particularly fluoride-based preforms, has been described in a paper entitled "Infrared Optical Fibres" by Tadashi Miyashita and alii, published in IEEE Journal of Quantum Electronics, Vol. QE-18, No. 10, October 1982.

According to this method, named "build-in coating", the material is heated and once it reaches a low viscosity degree is poured into a cylindrical vessel. When the desired-thickness layer for the cladding fabrication solidifies while contacting the cold wall of the vessel, the still liquid axial portion is poured and replaced by a material suited to core fabrication. After solidification the vessel is taken off and the resultant preform is then drawn.

An alternative process, oriented to eliminating the conicity of the preform obtained according to this method, is described in the article entitled "Fluoride Glass Preforms Prepared by a Rotational Casting Process" by D. C. Tran et al, published in Electronics Letters, 22 July 1982, Vol. 18, No. 15. The vessel, into which the fluoride-based material is poured for the fabrication of the cladding, is rotated around its axis, so as to obtain a constant-thickness layer owing to the centrifugal force. Then the process is the same as previously-described.

However these methods present a number of disadvantages, making it impossible to reach the above-mentioned theoretical attenuation limits. Some losses arise dependant on discontinuity localized in correspondence with the surface of contact between core and cladding, fabricated in successive time periods. Between these surfaces impurities of various nature, such as powders and gases, are incorporated and localized crystallizations can be found, originating scattering attenuations.

For fabricating halide glasses, i.e. fluoride glasses, it is further known from EP—A—25 230 to use liquid-phase reactants which are sprayed toward the lateral inner surface of a starting tube. Further, EP—A—135 903 describes a process for manufacturing optical fibres of metal halide glass by the reaction between an organometallic compound of the element whose halide compound is desired, and a gaseous reactant containing the halogen which preferably is fluorine, the process being carried out according to organometallic chemical vapour deposition techniques.

The preform can not be very big, since the ambient at controlled temperature, necessary to limit the pollution, is to comprise vessel rotating apparatus, furnaces, handling apparatus, glass fabricating apparatus, etc. As a consequence fibre trunks produced cannot be very long, while the low attenuation attainable by these methods would render of interest the fabrication of several hundred km-long fibre trunks.

Repeated raw material handlings introduce further unavoidable contaminations even by the most sophisticated methods.

Finally graded index fibres are difficult to obtain.

These disadvantages are overcome by the process of and the apparatus for manufacturing optical fibre preforms for operation in the mid-infrared, according to the present invention, which permit the fabrication of ultra-low loss optical fibres with refractive index profile varying as desired both radially and circularly, and of fibre trunks of any length.

The present invention provides a process as initially stated which is characterized in that said metal halides are heated to high temperature under controlled pressure so as to facilitate their passage to the vaporous state, then they are introduced by conduits kept at the same high temperature into a cooled tube and directed towards its wall where they directly condense to solid state, after which non halide-based portions, if any, are removed from the tube.

The invention provides also an apparatus for carrying out the process, which apparatus, starting out from the originally defined kind, is characterized in that a nozzle is placed at the end of said conduit and means are provided to translate the glass tube parallel to the same axis, that means are provided to cool the walls of the glass tube and that a fitting-tube and an air pump are provided by which the pressure in said tube, which is airtight, can be controlled.

Further features of the invention will be made clearer by the following description of a preferred embodiment thereof, given by way of example, and by the annexed drawing showing an apparatus for manufacturing optical-fibre preforms.

The process of the invention is used, in the present example, for manufacturing a fluoride-based optical-fibre preform. More particularly, a glass network with a mixture of CsF and $BeF_2$ is fabricated presenting a glass forming region ranging between 0 and 40% in weight of CsF.

The latter compound boils at 844°C at a pressure of 13 1/3 hPa (10 mmHg), while $BeF_2$ sublimates at 800°C at atmospheric pressure.

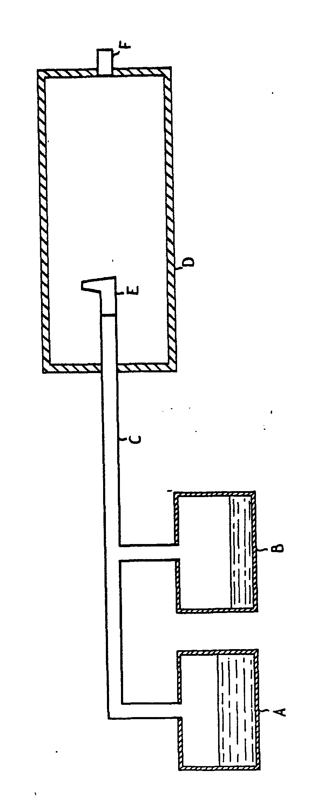

The preform is fabricated with the apparatus shown in Fig. 1.

Both powder fluorides are placed in vessels A and B, confluent into conduit C, and raised to temperatures higher than the corresponding subli-mation or boiling temperatures. To this aim suitable gas- or electric-furnaces are provided, surrounding the vessels themselves. Vapours obtained are sent by conduit C to tube D, on the internal wall thereof the deposition is carried out.

To keep under aeriform state the materials flowing into conduit C, C is heated to a temperature higher than or equal to the highest temperature among those of vessels A and B. To this aim conduit C can be provided with a double wall and in the interstice a fluid at high temperature is made to circulate. As an alternative a resistive electrical conductor is wound up wherein a current at a value apt to produce the necessary heat quantity is made to circulate. The conduit can also be made with a good heat-conducting material, heated outside tube D.

At the end of C a nozzle E is fixed, apt to direct the vapour jet towards the wall of tube D uniformely and according to one or more preferential directions.

Tube D is cooled with an external cooler, so as to make the vapour arriving at the tube wall condense directly at the solid-state and fluoride mixture deposit.

Besides, tube D is axially displaced and possibly rotated to obtain a uniform deposition on the whole internal surface. A suitable joint ensures airtightness between conduit C and tube D and an air pump connected to a pipe-fitting F allows the desired pressure to be attained within the system, composed of vessels A and B, conduits C and tube D. Besides, it extracts residual vapours.

Tube D can be made of fluoride- or oxide-based glasses, but in case of oxide glasses the internal surface is to be coated with a very stable halide-based layer, so as to avoid pollution of materials forming the fibre core and cladding. To this aim $CeF_3$, $EuF_2$, $HoF_3$, $MgF_2$, etc can be used, possibly deposited with the same method described here for the fibre-forming materials.

$BeF_2$ and CSF percentages can be varied by acting on the vapour quantities produced in vessels A and B. To obtain that, both the respective temperatures and free surfaces of components can be varied by varying the vessel dimensions.

Once the deposition is finished, in case the external portion of preform is made of oxide-based glasses, it is taken away by mechanical or chemical methods.

Finally, either tube D is collapsed in a high-temperature furnace so as to obtain a rod, which is then drawn to produce the optical fibre, or tube D is directly drawn.

The foregoing description has been provided only by way of a non limiting example. Variations and modifications are possible within the scope of the appended claims.

**Claims**

1. A process of manufacturing optical-fibre preforms for operation in the mid-infrared spectral range using solid-state metal halides as raw materials, characterized in that said metal halides are heated to high temperature under controlled pressure so as to facilitate their passage to the vaporous state, then they are introduced by conduits kept at the same high temperature into a cooled tube and directed towards its wall where they directly condense to solid state, after which non halide-based portions, if any, are removed from the tube.

2. A process as in claim 1, characterized in that different percentages of said vaporous-state halides are obtained by varying both the temperatures, at which they are heated, and their free surfaces.

3. A process as in claim 1 or 2, characterized in that said tube (D) is of oxide-based glass and its inner surface is clad with a layer of very stable metal halides ($CeF_3$, $EuF_2$, $HoF_3$, $MgF_2$,...).

4. A process as in claim 1 or 2, characterized in that said tube (D) is of halide-based glass.

5. An apparatus for implementing the process according to claim 1, comprising:
— two or more vessels (A, ..., B) heatable to a high temperature;
— a conduit (C) connected to said vessels and heatable to a temperature equal to or higher than the highest temperature among those of the vessels (A, ..., B);
— means for holding a glass tube (D) into which said conduit (C) can penetrate in axial position, means being also provided to rotate the tube around its axis;
characterized in that a nozzle (E) is placed at the end of said conduit and that means are provided to translate the glass tube parallel to the same axis, that means are provided to cool the walls of the glass tube and that a fitting-tube (F) and an air pump are provided by which the pressure in said tube, which is airtight, can be controlled.

6. An apparatus as in claim 5, characterized in that said conduit (C) is double-walled and in between the walls a high-temperature fluid is made to circulate.

7. An apparatus as in claim 5, characterized in that said conduit (C) comprises in its walls a resistive electric conductor apt to generate heat at the passage of the electrical current.

8. An apparatus as in claim 5, characterized in that said conduit (C) is of well heat-conducting material and is heated at one end.

9. An apparatus as in any of claims 5 to 8, characterized in that said nozzle (E) can direct said vaporous metal halides towards the wall of said tube (D) uniformly or according to one or more directions.

**Patentansprüche**

1. Verfahren zum Herstellen von Lichtleitfaser-Vorformen zum Betrieb im Spektralbereich des mittleren Infrarot, unter Verwendung von Metallhalogeniden im festen Zustand als Rohmaterialien, dadurch gekennzeichnet, daß man die Metallhalogenide unter gesteuertem Druck auf eine hohe Temperatur erwärmt, um so ihren Übergang in den gasförmigen Zustand zu erleichtern, und sie dann durch Leitungen, die auf der selben hohen Temperatur gehalten werden, in ein gekühltes Rohr einführt und sie zu dessen Wand leitet, wo sie unmittelbar zum festen Zustand kondensieren, woraufhin man eventuelle Teile, die nicht auf Halogeniden basieren, aus dem Rohr entfernt.

2. Verfahren nach Anspruch 1, dadurch gekennzeichnet, daß man dadurch verschiedene Prozentsätze der gasförmigen Halogenide erhält, daß man sowohl die Temperaturen, auf die sie erwärmt werden, als auch ihre freien Oberflächen verändert.

3. Verfahren nach Anspruch 1 oder 2, dadurch gekennzeichnet, daß das Rohr (D) aus Glas auf Oxidbasis besteht und seine Innenfläche mit einer Schicht aus sehr stabilen Metallhalogeniden ($CeF_3$, $EuF_2$, $HoF_3$, $MgF_2$, ...) bedeckt ist.

4. Verfahren nach Anspruch 1 oder 2, dadurch gekennzeichnet, daß das Rohr (D) aus Glas auf Halogenidbasis besteht.

5. Vorrichtung zur Durchführung des Verfahrens nach Anspruch 1, mit

— zwei oder mehr Gefäßen (A, ..., B), die auf eine hohe Temperatur erwärmbar sind;

— einer Leitung (C), die mit den Gefäßen verbunden ist und auf eine Temperatur erwärmbar ist, die gleich ist wie oder höher ist als die höchste Temperatur unter den Temperaturen der Gefäße (A, ..., B);

— einer Einrichtung zum Halten eines Glasrohrs, (D), in das die Leitung (C) in axialer Lage eindringen kann, mit Einrichtungen zum Rotieren des Rohrs um seine Achse;

dadurch gekennzeichnet, daß am Ende der Leitung eine Düse (E) angeordnet ist, und daß Einrichtungen, um das Glasrohr parallel zu dieser Achse zu versetzen, und außerdem Einrichtungen zur Kühlung der Wände des Glasrohrs, sowie ein Paßrohr (F) und eine Luftpumpe vorhanden sind, durch die der Druck im Rohr, das luftdicht ist, steuerbar ist.

6. Vorrichtung nach Anspruch 5, dadurch gekennzeichnet, daß die Leitung (C) eine doppelte Wand aufweist und daß zwischen den Wänden ein Strömungsmittel unter hoher Temperatur zirkulierbar ist.

7. Vorrichtung nach Anspruch 5, dadurch gekennzeichnet, daß die Leitung (C) in ihren Wänden einen elektrischen Leiter mit Widerstand aufweist, der beim Fließen von elektrischem Strom Wärme erzeugt.

8. Vorrichtung nach Anspruch 5, dadurch gekennzeichnet, daß die Leitung (C) aus gut wärmeleitendem Material ist und an einem Ende geheizt ist.

9. Vorrichtung nach einem der Ansprüche 5 bis 8, dadurch gekennzeichnet, daß die Düse (E) die gasförmigen Metallhalogenide auf die Wand des Rohrs (D) gleichförmig oder entsprechend einer oder mehreren Richtungen richten kann.

**Revendications**

1. Procédé pour la fabrication de préformes pour fibres optiques pour opérer dans la région spectrale de l'infrarouge moyen, qui utilise comme matériaux de base des halogénures de métal à l'état solide, caractérisé en ce que lesdites halogénures de métal sont portés à température élevée sous pression contrôlée de manière à en faciliter leur passage à l'état vapeur, puis ils sont introduits par des conduits maintenus à la même température élevée dans un tube refroidi et sont envoyés contre sa paroi oú ils sont condensés directement à l'état solide, le tube étant en fin privé des parties qui ne sont pas à base d'halogénures, s'il y en a.

2. Procédé selon la revendication 1, caractérisé en ce que l'on obtient les différents pourcentages desdits halogénures à l'état vapeur en modifiant les températures auxquelles ils sont portés aussi bien que leurs surfaces libres.

3. Procédé selon la revendication 1 ou 2, caractérisé en ce que ledit tube (D) est en verre à base d'oxyde et sa surface interne est revêtue d'une couche d'halogénures de métal très stables ($CeF_3$, $EuF_2$, $HoF_3$, $MgF_2$,...).

4. Procédé selon la revendication 1 ou 2, caractérisé en ce que ledit tube (D) est en verre à base d'halogénures.

5. Appareillage pour mettre en oeuvre le procédé selon la revendication 1, qui comprend:

— deux ou une pluralité de réservoirs (A, ..., B) qui peuvent être portés à haute température;

— un conduit (C) qui est connecté auxdits réservoirs et qui peut être porté jusqu'à une température égale ou plus haute que la température la plus haute entre les températures des réservoirs (A, ..., B);

— des moyens pour tenir en place le tube en verre (D) dans lequel ledit conduit (C) peut pénétrer en position axiale, des moyens étant aussi fournis pour mettre en rotation le tube autour de son axe;

caractérisé en ce qu'une tuyère (E) est placée à l'extrémité dudit conduit et que des moyens sont prévus pour transferer le tube en verre parallèlement au même axe, en ce que des moyens sont fournis pour refroidir les parois du tube en verre et en ce qu'un raccord (F) et une pompe à vide sont de même fournis pour contrôler la pression dans ce tube qui est étanche.

6. Appareillage selon la revendication 5, caractérisé en ce que ledit conduit (C) a une double paroi et dans l'interstice entre les deux parois on fait circuler un fluide à haute température.

7. Appareillage selon la revendication 5, caractérisé en ce que ledit conduit (C) comprend entre ses parois un conducteur électrique résistif capable d'engendrer de la chaleur au passage du courant électrique.

8. Appareillage selon la revendication 5, caractérisé en ce que ledit conduit (C) est d'un matériau bon conducteur de la chaleur et est chauffé à une extrémité.

9. Appareillage selon une quelconque des revendications de 5 à 8, caractérisé en ce que ladit tuyère (E) peut envoyer les halogénures de métal à l'état vapeur vers la parois dudit tube (D) uniformément ou selon une ou plusieurs directions.